Europäisches Patentamt

European Patent Office

Office européen des brevets

(11) Numéro de publication: **0 047 688**
**B1**

# FASCICULE DE BREVET EUROPEEN

(45) Date de publication du fascicule du brevet:
**30.11.83**

(21) Numéro de dépôt: **81401314.0**

(22) Date de dépôt: **18.08.81**

(51) Int. Cl.³: **H 01 K 3/00,** H 01 K 1/32,
H 01 J 61/35

---

(54) **Procédé d'opalisation de lampes d'éclairage par voie gazeuse.**

---

(30) Priorité: **10.09.80 FR 8019503**

(43) Date de publication de la demande:
**17.03.82 Bulletin 82/11**

(45) Mention de la délivrance du brevet:
**30.11.83 Bulletin 83/48**

(84) Etats contractants désignés:
**AT BE CH DE FR GB IT LI LU NL SE**

(56) Documents cités:
**FR - A - 961 085**
**US - A - 3 352 703**

(73) Titulaire: **L'AIR LIQUIDE, SOCIETE ANONYME POUR L'ETUDE ET L'EXPLOITATION DES PROCEDES GEORGES CLAUDE, 75, Quai d'Orsay, F-75321 Paris Cedex 07 (FR)**

(72) Inventeur: **Barbier, Jean-Paul, 18, rue Mansart, F-78.330 Fontenay-Le-Fleury (FR)**
Inventeur: **Lerouyer, Gilbert, Chemin des Ruelles, F-78.910 Orgerus (FR)**

(74) Mandataire: **Bouton Neuvy, Liliane et al, L'Air liquide, Société Anonyme pour L'Etude et L'Exploitation des Procédés Georges Claude 75, Quai d'Orsay, F-75321 Paris Cedex 07 (FR)**

---

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

BUNDESDRUCKEREI BERLIN

# 0 047 688

## Procédé d'opalisation de lampes d'éclairage par voie gazeuse

La présente invention concerne un procédé d'opalisation de lampes par voie gazeuse.

L'opalisation consiste en la réalisation d'un dépôt de produit blanc diffusant la lumière comme le dioxyde de titane, la silice ou l'alumine; le dépôt ayant une adhérence suffisante et une épaisseur convenable.

On a proposé diverses méthodes d'opalisation d'ampoules d'éclairage. Le procédé industriel actuellement employé consiste à remplir une ampoule d'une suspension de dioxyde de titane qui, après évacuation, laisse à la surface du verre un dépôt blanc que l'on séche à une température de 400 à 500°C.

Des méthodes par voie gazeuse sont également connues mais elles sont peu nombreuses et ne semblent pas être industrialisées. On peut citer la formation de dépôts de dioxyde de titane par hydrolyse de composés du titane tels le tétrachlorure de titane, selon le brevet US 3 352 703. On peut obtenir des dépôts d'alumine par combustion de composés organiques d'aluminium dissous dans un solvant en appliquant l'enseignement des brevets US 3 842 306 et 3 868 266. La Général Electric Co a décrit la réalisation de dépôt de silice par combustion de tétraéthyle silicate dans le brevet US 3 109 747, selon un procédé en plusieurs stades relativement complexe.

Le brevet français 961 085 concerne la fabrication de verres diffusants par application sur la face interne de fines particules de silice amorphe, dont le dépôt est effectué par la combustion à l'intérieur de l'ampoule d'un composé organique de silicium en présence d'oxygène.

Sachant que la silice serait le composé le plus performant pour l'opalisation des lampes, on a recherché une méthode de dépôt de silice entièrement par voie gazeuse, d'une part plus économique, et d'autre part plus simple et plus rapide que les méthodes connues. L'appareillage de mise en oeuvre de la nouvelle technique d'opalisation s'intègre aisément dans une chaine de fabrication d'ampoules, permettant ainsi de réaliser des économies de main d'oeuvre.

Selon l'invention, le procédé d'opalisation de lampes est du type par voie gazeuse avec réalisation à l'intérieur d'une lampe d'un dépôt de silice par oxydation par l'oxygène de silane, ledit dépôt de silice étant formé par oxydation à travers un arc électrique de silane dilué à une concentration de 0,1 à 3% en volume dans un gaz inerte vis à vis du silane.

On utilise du silane dilué dans un gaz inerte vis à vis de ce gaz afin d'éviter la décomposition préalable de l'hydrure de silicium. La dilution qui se fait de préférence au moment de l'emploi, est conduite de manière telle que les teneurs en silane dans les dits gaz inertes soient, pour des raisons de sécurité, inférieures à celles pour lequelles existent des risques d'auto-inflammation de l'hydrure de silicium. Elles sont en général supérieures à quelques dixièmes de pourcent pour que l'opération d'opalisation soit suffisamment rapide. Une teneur de 1 à 2% de silane dans un gaz inerte semble préférentielle, car elle permet d'obtenir une opalisation rapide avec sécurité. La limite supérieure de concentration du silane est pratiquement de 2,5 à 3%, c'est-à-dire juste en dessous du seuil d'inflammabilité du silane. La concentration en $SiH_4$ peut être choisie entre 0,1 et 3% en volume.

Tous les gaz inertes vis à vis du silane connviennent comme vecteur; on peut choisir l'azote, les gaz rares, l'hélium et l'hydrogène. L'azote, l'argon et l'hélium se révèlent particulièrement intéressants avec obtention de rendements en dépôt de silice croissants dans l'ordre de ces trois gaz.

Dans les conditions réactionnelles, la présence d'azote conduit à la formation de vapeurs d'oxydes d'azote, parfois assez abondantes, mais celles-ci disparaissent naturellement ou peuvent être désorbées par balayage gazeux.

L'hélium se révèle meilleur gaz inerte de dilution que l'azote et l'argon; il favorise d'un dépôt plus facile de la silice et conduit à un rendement plus élevé.

Le rendement d'opalisation correspondant au dépôt de silice est déterminé par pesée de la lampe après l'opération. La masse de silice déposée à l'intérieur de la lampe est désignée par $MSiO_2$ et le volume total de silane pur utilisé pour l'opalisation par $VSiH_4$. Le rendement en silane est donné par le rapport du volume de silane théoriquement nécessaire pour fabriquer la masse de silice déposée sur le volume total de silane utilisé.

L'arc électrique a pour fonction de permettre l'oxydation et, par conséquent, de réaliser le dépôt de silice par décomposition de l'hydrure de silicium.

On a remarqué que la formation du dépôt de silice à l'intérieur de la lampe dépend de la tension appliquée entre les bornes des électrodes de l'arc en courant alternatif. La tension doit être supérieure à quelques milliers de volts, par exemple comprise entre 5000 et 10 000 volts, les meilleurs rendements étant obtenus avec un arc électrique auquel on applique une tension comprise entre 7000 et 9000 volts, l'intensité étant faible. En dessous de 5000 volts et au-dessus de 10 000 volts très peu de silice se dépose et il se produit une chute du rendement d'opalisation.

On a observé que l'emploi d'un arc électrique est nécessaire à la formation du dépôt de silice. L'arc électrique doit être le plus large possible, afin de passer des quantités importantes de gaz en un temps donné et d'obtenir une opalisation rapide; l'écartement des électrodes est donc le plus grand possible en fonction de la taille de la lampe.

D'autre part, la vitesse de formation du dépôt de silice est fonction du débit total des gaz: silane

2

# 0 047 688

dilué dans un gaz inerte et oxygène tout en cherchant à faire passer le maximum de gaz actif à travers l'arc électrique.

Dans les conditions de l'invention, et pour des ampoules de type courant, le débit total des gaz ne doit pas être supérieur à 600 l/h, au delà de ce débit le dépôt de silice n'est plus satisfaisant.

Pour obtenir un dépôt régulier de silice sur les parois de l'ampoule, on peut réaliser un mélange homogène des deux gaz silane dilué et oxygène à l'intérieur de l'ampoule avant le passage du mélange gazeux à travers l'arc électrique. Et dans ce cas, pour réaliser un mélange in-situ des deux gaz, il parait préférable de prévoir l'arrivée des deux courants gazeux à un même niveau ou à des niveaux sensiblement proches. Il est avantgeux d'envisager une alimentation centrale de l'hydrure de silicium dilué, en vue d'obtenir une bonne répartition du gaz actif dans l'arc, et une alimentation latérale de l'oxygène, avec un débit du mélange silane-gaz inerte beaucoup plus élevé que celui de l'oxygène.

On peut également effectuer le prémélange: silane dilué et oxygène, à l'extérieur de la lampe, et faire déboucher celui-ci de manière centrée à l'intérieur de la lampe entre les électrodes.

On comprend l'intérêt d'une alimentation en silane dilué avec une vitesse importante en vue de minimiser la durée d'opalisation. Le débit de silane dilué peut être avantageusement compris entre 100 et 500 litres/heure, en dessous de 100 l/h le temps d'opalisation de l'ampoule est relativement trop long et au-delà de 500 l/h on constate une chute du rendement d'opalisation. De préférence, on choisit un débit d'alimentation en silane dilué compris entre 150 et 200 litres/heure, ce débit en produit actif permettant d'atteindre l'objectif que l'on s'est fixé, à savoir un rendement d'opalisation le plus élevé possible en un temps d'opalisation le plus court possible. Les temps d'opalisation sont en général compris entre 30 secondes et 4 minutes, en moyenne 35 secondes à 2 minutes notamment pour des lampes format standard sphérique.

Le débit d'oxygène peut être avantageusement compris entre 10 et 60 litres/heure et de préférence entre 10 et 30 litres/heure.

Quand on utilise la technique du mélange in-situ, les deux gaz sont véhiculés dans l'ampoule (1) par l'intermédaire d'un tube central (4) destiné au passage du silane dilué dans un gaz inerte, et par un tube latéral pour l'arrivée de l'oxygène (3). On choisit la hauteur d'arrivée des gaz dans l'ampoule de manière à obtenir avec le meilleur rendement une opalisation régulière. En plaçant les orifices d'arrivée dans le bas du col d'une ampoule de type classique on observe une chute de rendement d'opalisation de toute l'ampoule. On observe le même phénomène de chute de rendement quand les arrivées de flux gazeux sont situées en haut du col, mais avec cette disposition on remarque une très bonne opalisation de la calotte sphérique. On a trouvé que le positionnement des orifices d'arrivée des gaz aux deux tiers du col de l'ampoule en partant de la base avec interaction de l'arc (2) au sommet du col est optimal pour obtenir une excellente opalisation quant à la qualité et au rendement. Pour des raisons de sécurité il est avantageux de mettre les électrodes sous tension avant l'introduction du mélange gazeux.

Le diamètre des orifices d'arrivée des gaz dans l'ampoule est aussi choisi de manière à répondre aux deux exigences précédentes. Dans le cas d'ampoulès de type courant, l'écartement des électrodes de l'arc est compris entre 10 et 12 millimètres. Pour d'autres types d'ampoules avec des largeurs de col différentes cet écartement peut être modifié et adapté. Avec des ampoules de type standard sphérique dans lesquelles de débit du mélange $SiH_4$ + gaz inerte est de 100 à 500 l/heure et les orifices de sortie du silane dilué et de l'oxygène positionnés aux deux tiers du col à partir de la base du col de l'ampoule, on obtient les résultats les plus satisfaisants avec des orifices de sortie de gaz circulaires de diamètre environ 2 millimètres. Dans les mêmes conditions avec des orifices de diamètre trois à quatre fois plus grands on observe une opalisation faible et irrégulière; ainsi avec un débit en silane dilué de 300 à 400 l/heure le dépôt de silice montre deux plages relativement transparentes de quelques millimètres carrés de surface. En choisissant des arrivées de gaz rectangulaires, telles des fentes par exemple de 6 millimètres de long et de 1 millimètre de large on remarque une diminution du rendement d'opalisation et une irrégularité du dépôt.

On a constaté l'influence favorable d'un refroidissement extérieur de l'ampoule en cours d'opalisation; c'est ainsi qu'un refroidissement extérieur du globe par un courant gazeux tel que de l'azote froid ou de l'air froid pulsé, par de l'eau froide, etc ... conduit à une augmentation du rendement en silice déposée de l'ordre de 10% à quantité égale de silane introduit. Toutefois, sur des opalisations de courte durée (entre 30 et 60 secondes), pendant lesquelles la température du globe ne dépasse pas 65°C, au lieu de 100—110°C pour une opalisation de 2 minutes, l'influence d'un refroidissement est moins sensible.

On a aussi découvert qu'une conduite dynamique de l'opalisation sous vide partiel peut présenter des facilités industrielles de technologie d'appareillage. L'opalisation à l'intérieur d'une lampe sous légère dépression maintenue au cours de l'opalisation apporte une plus grande sécurité, accompagnée d'une diminution du risque de pollution et d'une économie de consommation en silane.

Le procédé est applicable à l'opalisation des lampes à incandescence et à décharge de différents formats, y compris les tubes, et aussi à celle des globes des appareils d'éclairage. Le procédé d'opalisation des ampoules d'éclairage s'intègre dans une chaine de fabrication de celles-ci.

L'opalisation des tubes peut être réalisée en leur imposant une translation parallèlement à leur axe, la longueur des électrodes et du tube d'introduction du gaz étant au minimum égale à celle des tubes à

3

opaliser.

Il est donné ci-après des exemples qui illustrent l'invention à titre non limitatif.

Exemple 1

Dans une lampe format standard clair, de hauteur totale 127 millimètres, dont le diamètre est 60 millimètres dans la partie sphérique, de 36 millimètres au bas du col et de 33 millimètres en haut du col, à l'aide de l'appareillage décrit précédemment, dans lequel les buses d'introduction des gaz ont un diamètre de 2 mm, les orifices de sortie des gaz sont aux 2/3 du col de la lampe et les électrodes de l'arc écartées de 10 mm sont positionnées au sommet du col de la lampe, la tension appliquée étant de 8000 volts et l'intensité du courant alternatif de 25 milliampères, on réalise un essai avec un débit de gaz de 400 l/h en faisant passer pendant 2 minutes 13,3 litres de silane dilué à 1% dans l'hélium par la canalisation centrale et 0,7 litres d'oxygène par la canalisation latérale. On obtient un dépôt très homogène de 155 mg de silice avec un rendement de 46,6%.

Exemple 2

Dans les mêmes conditions de positionnement des électrodes de l'arc, auxquelles est appliquée une tension de 8000 volts, l'intensité du courant alternatif étant de 25 mA, le diamètre des buses d'arrivée des gaz de 2 mm comme précédemment, on effectue un essai avec un débit de gaz de 300 l/heure, en faisant passer, pendant 2,5 minutes, 12,5 litres de silane dilué à 1% dans l'hélium, par la canalisation centrale et 0,8 l d'oxygène par la canalisation latérale. On obtient un dépôt très homogène de 140 mg de silice avec un rendement de 47%.

Exemple 3

Dans les mêmes conditions d'appareillage, de positionnement des électrodes, de tension, d'intensité, de diamètre de buses d'arrivée de gaz, on réalise un essai avec un débit de gaz de 300 l/h en faisant passer pendant 2,5 minutes 12,5 litres de silane dilué dans 1% d'argon et 0,8 litres d'oxygène, on obtient un dépôt homogène de silice de 90 mg avec un rendement de 29%.

Exemple 4

Dans des conditions identiques d'appareillage, de positionnement d'électrodes, de tension, d'intensité de courant, de diamètre des buses, on réalise un essai avec un débit gazeux de 500 l/h, en faisant passer pendant 1,5 minutes, 12,5 litres de silane dilué dans 1% d'hélium et 0,8 litre d'oxygène, on obtient un dépôt homogène de 125 mg correspondant à une bonne opalisation avec un rendement de 40%.

Exemple 5

Dans les mêmes conditions d'appareillage que précédemment, de positionnement d'électrodes, de tension, d'intensité, de diamètre de buses, on réalise un essai avec 300 l/heure de débit gazeux, en faisant passer 12,5 l de silane dilué dans 1% d'azote pendant 2,5 minutes et 0,8 litres d'oxygène. Il se forme des vapeurs d'oxydes d'azote qui peuvent éventuellement être éliminées par balayage gazeux ou disparaitre naturellement. On obtient un dépôt homogène de 76 mg de silice avec un rendement de 24,3%.

Exemple 6

Dans les mêmes conditions d'appareillage avec positionnement des électrodes, tension appliquée, intensité du courant identiques, le diamètre des buses d'arrivée des gaz étant de 6 millimètres, on réalise un essai avec un débit gazeux de 300 litres/h, en faisant passer pendant 2,5 minutes 12,5 litres de silane dilué dans 1% d'argon par la canalisation centrale et 0,8 l d'oxygène (20 l/h) par la canalisation latérale. On obtient un dépôt de 110 mg de silice avec une opalisation irrégulière de l'ampoule, le rendement étant de 37%.

### Exemple 7

Dans les mêmes conditions d'appareillage que précédemment mais avec remplacement de l'orifice de sortie circulaire des buses par une fente de 1 mm de large sur 6 mm de long, on fait passer selon l'exemple 6 pendant 2,5 minutes avec un débit de 300 litres/heure 12,5 litres de silane par la canalisation centrale et 0,8 litre d'oxygène par la canalisation latérale. On obtient avec un rendement de 25% un dépôt irrégulier de 76 mg de silice.

### Exemple 8

On a conduit une série d'essais avec une tête de machine à opaliser, avec prémélange du silane dilué dans l'argon et de l'oxygéne suivant les conditions de l'invention, la dite tête à opaliser s'adaptant sur une machine de fabrication de lampes.

Ces essais ont été effectués comme précédemment dans des lampes format standard clair de diamètre 60 millimètres dans la partie sphérique.

On a tout d'abord étudie l'influence de la teneur en silane dans le mélange de 1 à 1,78% dans l'argon.

Les résultats sont consignés dans le tableau I ci-dessous.

Q (l/h): débit de silane dilué dans l'argon;
t: durée d'opalisation;
$VSiH_4$: volume total de silane pur utilisé pour l'opalisation;
$MSiO_2$: masse de silice déposée à l'intérieur de l'ampoule;
R %: rendement en silane

$$\left(\frac{\text{Volume de silane théoriquement nécessaire pour fabriquer la masse de silice déposée}}{\text{volume total de silane utilisé}}\right)$$

Tableau I

Opalisation à $\theta$ ambiante

| Q l/h | t (min) | Volume (ml) SiH$_4$ | M (mg) SiO$_2$ | R (%) |
|---|---|---|---|---|
| Mélange (1%) | | | | |
| 150 | 2 | 50 | 63 | 49 |
| 150 | 1,5 | 37 | 47 | 51 |
| Mélange (1,5%) | | | | |
| 150 | 1 | 37 | 46 | 50 |
| | 1,25 | 46 | 60 | 52 |
| | 1,75 | 65 | 85 | 52 |
| 170 | 0,75 | 32 | 44 | 57 |
| | 1 | 42 | 60 | 58 |
| | 1,25 | 53 | 77 | 58 |
| 190 | 0,75 | 35 | 48 | 55 |
| | 1 | 47 | 68 | 58 |
| Mélange (1,78%) | | | | |
| 170 | 0,75 | 37 | 56 | 60 |
| 190 | 0,58 | 32 | 54 | 67 |

De la lecture de ce tableau on peut en déduire les conditions opératoires optimales pour une opalisation satisfaisante:

— avec du silane dilué à 1% dans l'argon
débit du mélange gazeux          150 l/h
débit en oxygène                 10 l/h
temps d'opalisation              1 min 30 s
masse de silice déposée          47 mg
rendement en SiO$_2$ déposé      51%

— avec du silane dilué à 1,5% dans l'argon
débit du mélange gazeux          170 l/h
débit en oxygène                 10 l/h
temps d'opalisation              45 s
masse de silice déposée          44 mg
rendement en SiO$_2$ déposé      57%

— avec du silane dilué à 1,78% dans l'argon
débit du mélange gazeux          190 l/h
débit en oxygène                 15 l/h
temps d'opalisation              35 s
masse de silice déposée          54 mg
rendement en SiO$_2$ déposé      67%

# 0 047 688

Exemple 9

Etude de l'influence d'un refroidissement extérieur de l'ampoule en cours d'opalisation.

Les résultats obtenus dans les mêmes conditions que celles de l'exemple précédent, mais avec refroidissement, sont consignés dans le tableau II, ci-dessous.

Opalisation sous refroidissement

| Q (l/h) | t (min) | Volume (cm$^3$) SiH$_4$ | M (mg) SiO$_2$ | R (%) | mode de refroi- dissement |
|---------|---------|-------------------------|----------------|-------|---------------------------|
| **Mélange (1%)** | | | | | |
| 150 | 2 | 50 | 78 | 62 | eau froide |
| 150 | 1,5 | 37 | 50 | 54 | air pulsé |
| 150 | 1,25 | 31 | 41 | 53 | air pulsé |
| **Mélange (1,5%)** | | | | | |
| 170 | 0,75 | 32 | 48 | 60 | air pulsé |
| 190 | 0,58 | 27 | 40 | 59 ⎫ | air pulsé |
| | 1 | 47 | 73 | 62 ⎭ | |
| **Mélange (1,78%)** | | | | | |
| 190 | 0,58 | 32 | 56 | 69 | air pulsé |

Le refroidissement extérieur du globe conduit à une augmentation du rendement en SiO$_2$ déposée qui peut atteindre plus de 10% à quantité égale de silane introduit.

Mais sur des opalisations de courte durée de l'ordre de 30 à 45 secondes, l'influence du refroidissement est peu sensible.

Exemple 10

Essais en dépression

Dans ces essais on utilise un système de filtres pour retenir les particules de silice entrainées afin d'éviter un encrassage des lignes de vide et du système de pompage, les autres conditions étant semblables à celles de l'exemple 8.

La presion initiale à l'intérieur de la lampe est de 0,5 bar absolu, et en cours d'essai la pression est maintenue entre 0,5 et 0,6 bar absolu. Les débit des fluides sont affichés à la pression atmosphérique et ne varient pas ou peu en fonction du $\Delta$ P pendant l'opalisation

| | |
|---|---|
| débit du mélange SiH$_4$—Ar à 1,5% en SiH$_4$ | 175 l/h |
| débit oxygène | 10 l/h |
| durée de l'opalisation | 45 s |
| masse de SiO$_2$ déposée | 57 à 62% |

On constate que les résultats obtenus en dépression sont tout à fait comparables à ceux réalisés à la pression atmosphérique dans les mêmes conditions de débits et de temps.

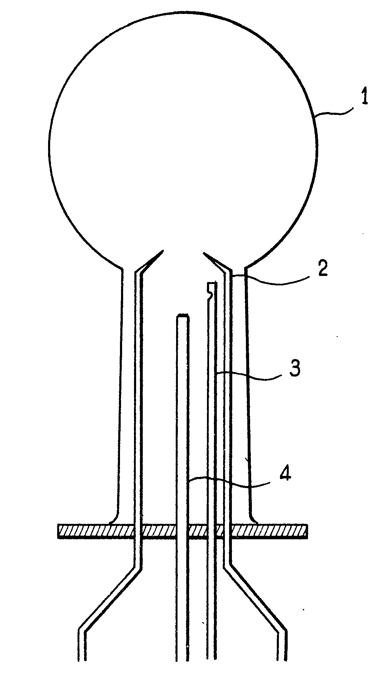

## Revendications

1. Procédé d'opalisation de lampes par voie gazeuse avec réalisation à l'intérieur de la lampe d'un dépôt de silice par oxydation par l'oxygène de silane, caractérisé en ce que le dit dépôt de silice est formé par oxydation à travers un arc électrique de silane dilué à une concentration de 0,1 à 3% en

7

volume dans un gaz inerte vis à vis du silane.

2. Procédé d'opalisation de lampes selon la revendication 1, caractérisé en ce que la concentration du silane dans le gaz inerte est comprise entre 1 et 2%.

3. Procédé d'opalisation de lampes selon la revendication 1 ou 2, caractérisé en ce que l'arc électrique est alimenté par une tension alternative entre 5000 et 10 000 volts.

4. Procédé d'opalisation de lampes selon une quelconque des revendications 1 à 3, caractérisé en ce que le débit de silane dilué est compris entre 100 et 500 litres/heure, de préférence 150 à 200 l/h le débit d'oxygène étant compris entre 10 et 60 litres/heure et de préférence entre 10 et 30 l/h.

5. Procédé d'opalisation de lampes selon la revendication 1, caractérisé en ce que l'opalisation est mise en oeuvre avec refroidissement extérieur de la lampe en cours d'opalisation.

6. Procédé d'opalisation de lampes selon la revendication 1, caractérisé en ce qu'il est mis en oeuvre sous légère dépression à l'intérieur de la lampe, ladite dépression étant maintenue au cours de l'opalisation.

7. Procédé d'opalisation de lampes selon une quelconque des revendications 1 à 6, caractérisé en ce que l'on réalise un mélange homogène des deux fluides gazeux: silane dilué et oxygène à l'intérieur de la lampe avant le passage du dit mélange gazeux à travers l'arc électrique.

8. Procédé d'opalisation de lampes selon la revendication 7, caractérisé en ce que l'on réalise une alimentation centrale du silane dilué et une alimentation latérale de l'oxygène.

9. Procédé d'opalisation de lampes selon une quelconque des revendications 1 à 6, caractérisé en ce que l'on réalise un prémélange homogène des deux fluides gazeux: silane dilué et oxygène à l'extérieur de la lampe avec une alimentation centrale à l'intérieur de la lampe.

10. Application du procédé selon une quelconque des revendications 1 à 9 à l'opalisation des lampes à incandescence et à décharge de différents formats y compris les tubes, et des globes des appareils d'éclairage.

## Patentansprüche

1. Verfahren zur Opalisierung von Lampen aus der Gasphase durch Ausbildung eines Niederschlages von Siliciumdioxid im Inneren der Lampe durch Oxidation von Silan mit Hilfe von Sauerstoff, dadurch gekennzeichnet, daß man den Siliciumdioxidniederschlag durch Oxidation von mit einem gegenüber dem Silan inerten Gas auf eine Konzentration von 0,1 bis 3 Volumen-% verdünntem Silan in einem Lichtbogen bildet.

2. Verfahren zur Opalisierung von Lampen nach Anspruch 1, dadurch gekennzeichnet, daß die Silankonzentration in dem inerten Gas zwischen 1 und 2% liegt.

3. Verfahren zur Opalisierung von Lampen nach Anspruch 1 oder 2, dadurch gekennzeichnet, daß der Lichtbogen mit einer Wechselspannung zwischen 5000 und 10 000 Volt gespeist wird.

4. Verfahren zur Opalisierung von Lampen nach einem der Ansprüche 1 bis 3, dadurch gekennzeichnet, daß der Durchsatz an verdünntem Silan zwischen 100 und 500 l je Stunde, vorzugsweise zwischen 150 und 200 l je Stunde und der Durchsatz an Sauerstoff zwischen 10 und 60 l je Stunde, vorzugsweise zwischen 10 und 30 l je Stunde liegt.

5. Verfahren zur Opalisierung von Lampen nach Anspruch 1, dadurch gekennzeichnet, daß die Opalisierung unter Außenkühlung der Lampe während der Opalisierung durchgeführt wird.

6. Verfahren zur Opalisierung von Lampen nach Anspruch 1, dadurch gekennzeichnet, daß sie bei leichtem Unterdruck im Inneren der Lampe durchgeführt wird, wobei dieser Unterdruck während des Verlaufes der Opalisierung aufrechterhalten wird.

7. Verfahren zur Opalisierung von Lampen nach einem der Ansprüche 1 bis 8, dadurch gekennzeichnet, daß man ein homogenes Gemisch der beiden gasförmigen Fluide, des verdünnten Silans und des Sauerstoffes, im Inneren der Lampe erzeugt, bevor dieses gasförmige Gemisch durch den Lichtbogen geht.

8. Verfahren zur Opalisierung von Lampen nach Anspruch 7, dadurch gekennzeichnet, daß man das verdünnte Silan mittig und den Sauerstoff seitlich einführt.

9. Verfahren zur Opalisierung von Lampen nach einem der Ansprüche 1 bis 6, dadurch gekennzeichnet, daß man eine homogene Vormischung der beiden gasförmigen Fluide, des verdünnten Silans und des Sauerstoffes, außerhalb der Lampe erzeugt und in das Innere der Lampe mittig einführt.

10. Anwendung des Verfahrens nach einem der Ansprüche 1 bis 9 zur Opalisierung von Glühlampen und Glimmlampen unterschiedlicher Formate einschließlich Röhren und Kugeln oder Glocken für Beleuchtungskörper.

## Claims

1. Method for the opalization of lamps in a gaseous way by realizing a deposition of silica in the interoir of the lamp by oxidation of silane by oxygen, characterized in that the said deposition of silica is formed by oxidation of a silane diluted to a concentration of from 0.1 to 3 percent by volume by means of a gas inert to the silane across an electric arc.

2. Method for the opalization of lamps according to claim 1, characterized in that the concentration of silane in the inert gas is between 1 and 2 percent.

3. Method for the opalization of lamps according to claim 1 or 2, characterized in that the electric arc is fed with an alternating voltage of between 5000 and 10 000 volts.

4. Method for the opalization of lamps according to one of the claims 1 through 3, characterized in that the throughput of diluted silane is between 100 and 500 l per hour, preferably between 150 and 200 l per hour and the throughput of oxygen is between 10 and 60 l per hours, preferably between 10 and 30 l per hour.

5. Method for the opalization of lamps according to claim 1, characterized in that the opalization is carried out with cooling the exterior of the lamp during the opalization.

6. Method for the opalization of lamps according to claim 1, characterized in that it is carried out at a slightly reduced pressure within the interior of the lamp, the reduced pressure being maintained during the opalization.

7. Method for the opalization of lamps according to one of the claims 1 through 6, characterized in that a homogeneous mixture of the two gaseous fluids, the diluted silane and the oxygen, is realized within the interior of the lamp before the said gaseous mixture is passed across the electric arch.

8. Method for the opalization of lamps according to claim 7, characterized in that the diluted silane is fed centrally and the oxygen laterally.

9. Method for the opalization of lamps according to one of the claims 1 through 6, characterized in that a homogeneous premixture of the two gaseous fluids, the diluted silane and the oxygen, is realized at the exterior of the lamp and fed centrally into the interior of the lamp.

10. Use of the method according to one of the claims 1 through 9 for the opalization of incandescent lamps and discharge lamps of different shape including tubes and globes of lighting units.